(19) Europäisches Patentamt / European Patent Office / Office européen des brevets

(11) **EP 2 332 754 A1**

(12) **EUROPEAN PATENT APPLICATION**

(43) Date of publication:
**15.06.2011 Bulletin 2011/24**

(51) Int Cl.:
*B60G 3/26* (2006.01)     *B60G 21/05* (2006.01)
*B60G 21/073* (2006.01)     *B62D 17/00* (2006.01)

(21) Application number: **09177458.8**

(22) Date of filing: **30.11.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Cappuyns, Philippe**
**2970 Schilde (BE)**

(72) Inventor: **Cappuyns, Philippe**
**2970 Schilde (BE)**

(74) Representative: **Luys, Marie-José A.H. et al**
**Gevers**
**Intellectual Property House**
**Holidaystraat 5**
**1831 Diegem (BE)**

(54) **Chassis for a suspended vehicle, suspended vehicle comprising such a chassis and method for correcting the camber of a suspended vehicle in response to rolling of the suspended vehicle during turning**

(57)     Chassis (1) for a suspended vehicle comprising a frame connected to coaxial wheel knuckles (4, 5) by two suspension arms (2, 3) on opposing sides of the frame, the knuckles (4, 5) being linked by camber adjustment rods (6, 7) to roll measuring means (8) for adjusting the camber angle defined by the knuckles (4, 5) in response to rolling of the suspended vehicle during turning over a roll angle measured by the roll measuring means (8), characterised in that the roll measuring means (8) are provided to measure the roll angle by comparing the angular positions of the suspension arms (2, 3) with respect to the frame.

*F i g . 1*

EP 2 332 754 A1

**Description**

The present invention relates to a chassis for a suspended vehicle according to the preamble of the first claim and a suspended vehicle comprising such a chassis. The invention also relates to a method for correcting the camber of a suspended vehicle in response to rolling of the suspended vehicle during turning.

Such a chassis for a suspended vehicle is already known to the person skilled in the art. US2002/0070509 A1 for example describes a chassis for a suspended vehicle which comprises a frame connected to coaxial wheel knuckles by two suspension arms on opposite sides of the frame. The knuckles are linked by camber adjustment rods to roll measuring means for adjusting the camber angle defined by the knuckles in response to rolling of the suspended vehicle during turning over a roll angle measured by the roll measuring means. The roll measuring means comprise two roll detecting links respectively connected to the front part of a wheel rotational centre at the knuckle of the left wheel and to the rear part of the wheel rotational centre at the knuckle of the right wheel and forming a shape of letter L by being bent at a position where the links cross with a vertical line passing through the wheel rotation centre. The chassis further comprises a differential gear unit which has bevel gears installed at each end of the two roll detecting links for both side gears. A worm gear is formed at a differential gear case of the differential gear unit. A camber control rack is formed with a gear meshed to the worm gear and horizontally installed with a vertical axle to make a horizontal motion. The camber adjustment rods connect both sides of the camber control rack to both wheel knuckles.

When both wheels vertically move simultaneously, the vertical motion of the knuckles rotates the roll detecting links in opposing directions such that the side gears connected to the roll detecting links are rotated in the opposite directions to rotate the pinion of the differential gear unit. This way, the pinion is simply rotated, but the differential case providing a rotational axis to the pinion is not. However, when the vertical movement of the wheels becomes opposite when a vehicle rolls, the knuckles move to opposite directions such that the roll detecting links rotate to an identical direction. At this time, the two side gears are under a unidirectional rotational force of the roll detecting links. As the two side gears do not rotate the pinion, the differential gear case and therefore the worm gear are rotated, horizontally driving the camber control rack which then, in its turn, drives the camber adjustment rods to adjust the camber angle of the wheels in response to the vertical movement of the wheels.

Although such a chassis allows the adjustment of a camber angle caused by rolling of the suspended vehicle while turning, it has been found very cumbersome to adjust the camber angle in such a way.

The object of the current invention can therefore be seen as to provide chassis for a suspended vehicle which allows adjustment, or even correction, of the camber angle in a more easy way.

This is achieved with a vehicle chassis showing the technical features of the characterising portion of the first claim.

Thereto, the roll measuring means are provided to measure the roll angle by comparing the angular positions of the suspension arms with respect to the frame.

The inventor has realised that the roll angle can be derived from comparing the angular positions of the suspension arms with respect to the frame and therefore that by comparing the angular positions of the suspension arms, the camber angle which is substantially the same as the roll angle can be derived. By comparing the angular positions of the suspension arms it is no longer needed to compare the vertical movement of the wheels and a more easy way to adjust, or even correct, the camber angle is provided by directly comparing the angular positions of the suspension arms with respect to the frame. Moreover, the angular positions of the suspension arms can be compared by the suspension arms themselves without having to connect the knuckles to the roll measuring means, but by, for example, interconnecting the roll measuring means to the suspension arms.

In preferred embodiments of the current invention the roll measuring means comprise a mechanical comparator for mechanically deducing the roll angle by comparing the angular positions of the suspension arms with respect to the frame and at least one roll measuring rod mechanically linked to a first suspension arm for mechanically feeding the angular position of the first suspension arm to the comparator by a substantially longitudinal movement of the roll measuring rod. By feeding the angular position of the first suspension arm to the comparator by the longitudinal movement of the roll measuring rod a relative simple way is used to transfer the angular position of the first suspension arm to the mechanical comparator. Especially, in comparison to the rotational movement of the roll detecting links according to US2002/0070509 A1, the longitudinal movement of the roll measuring rod is far simpler for transferring information to the comparator.

In further preferred embodiments of the chassis according to the present invention, the comparator comprises a roll rod pivotably linked to at least one of the two camber adjustment rods wherein the pivoting of the roll rod is caused by the roll angle and adjusts the position of the camber adjustment rod such as to adjust the corresponding camber angle according to the roll angle. Such a roll rod has been found a mechanically simple and cheap way to compare the angular positions of the suspension arms.

In further preferred embodiments of the chassis according to the present invention, the roll rod is linked to the roll measuring rod at a first end part and to the second suspension arm at a second end part opposing the first end part.

Such a roll rod has been found a mechanically simple and cheap way to compare the angular positions of the suspension arms.

In further preferred embodiments of the chassis according to the present invention, the camber adjustment rod is slideably linked to the roll rod. This is however not critical and the camber adjustment rod can also be connected to the roll rod using a hinge. In the latter case, the camber adjustment rod can also have a function as an additional suspension arm for the knuckle.

In other preferred embodiments of the chassis according to the present invention, the comparator comprises an assembly of a first pinion, a second pinion and a satellite engaging the first and the second pinion, the first pinion linked to the roll measuring rod such as to rotate in accordance with the angular position of the first suspension arm and the second pinion rotating in accordance with the angular position of the second suspension arm, the satellite engaging the first and the second pinion such that it tilts a satellite rod connected to the satellite along its axis of rotation in accordance with the roll angle, the satellite rod being connected to at least one of the camber adjustment rods to adjust the position of the camber adjustment rod such as to adjust the corresponding camber angle according to the roll angle. In such a comparator the satellite rod will not tilt when the suspension arms both move equally in the same direction such as upward or downward, whereas when the suspension arms rotate unequally and/or in opposing directions the satellite rod tilts in such a configuration. Such comparator has been found a good mechanical alternative to compare the angular positions of the suspension arms.

In other preferred embodiments of the chassis according to the present invention, the roll measuring rod is a first gauge piston of a first gauge cylinder of the comparator which is linked hydraulically to a camber cylinder of which the camber piston is connected to at least one of the camber adjustment rods and adjusts the position of the camber adjustment rod such as to adjust the corresponding camber angle according to the roll angle. Such comparator has been found a good mechanical alternative to compare the angular positions of the suspension arms. In such a system also the number of moving parts can be reduced whereas maintaining the same advantages.

In preferred embodiments of the chassis according to the present invention a second roll measuring rod is mechanically linked to the second suspension arm for mechanically feeding the angular position of the second suspension arm to the comparator by a substantially longitudinal movement of the second roll measuring rod. By feeding the angular position of the second suspension arm to the comparator by the longitudinal movement of the second roll measuring rod a relative simple way is used to transfer the angular position of the second suspension arm to the mechanical comparator. Especially, in comparison to the rotational movement of the roll detecting links according to US2002/0070509 A1, the longitudinal movement of the roll measuring rod is far simpler for transferring information to the comparator.

In more preferred embodiments of the chassis according to the present invention the second roll measuring rod is a second gauge piston of a second gauge cylinder of the comparator and in that the second gauge cylinder is hydraulically linked to the first gauge cylinder and in that the first and the second gauge cylinder are hydraulically linked to the camber cylinder. Such a second gauge piston and gauge cylinder allows to further make the chassis mechanically more simple.

The invention also relates to a suspended vehicle comprising a chassis according to the invention.

In preferred embodiments such a suspended vehicle is four-wheeled vehicle and/or a car.

The invention also relates to a method for correcting the camber of a suspended vehicle in response to rolling of the suspended vehicle during turning over a roll angle AR, the vehicle having two suspension arms on opposing sides of a frame of the suspended vehicle, wherein the roll angle AR is calculated by comparing the angles ABL and ABR between the suspension arms and the frame and using the length of the suspension arms B and the sum T of the length of the suspension arms B with the width of the frame.

The inventor has found that such a method allows to calculate in a relative simple way, either analogously or electronically, the roll angle of the suspended vehicle directly from the position of the suspension arms with respect to the frame of the vehicle. Since the roll angle is substantially equal to the camber of the wheels during turning, the roll angle can be used to correct the camber angle of the wheels of the vehicle.

The present invention is further illustrated in the accompanied figures and description of the figures.

Figure 1 shows an overview of an embodiment of a chassis according to the invention.
Figure 2 shows an overview of a different embodiment of the chassis shown in figure 1.
Figure 3 shows an overview of a different embodiment of the chassis shown in figure 1.
Figure 4 shows an overview of a different embodiment of the chassis shown in figure 1.
Figure 5 shows a cross-section of a side view of a different embodiment of the chassis shown in figure 1.

    1. Chassis
    2. First suspension arm
    3. Second suspension arm
    4. First knuckle

5. Second knuckle
6. First camber adjustment rod
7. Second camber adjustment rod
8. Roll measuring means
9. Mechanical comparator
10. Roll measuring rod
11. Roll rod
12. Slide
13. First end part
14. Second end part
15. First pinion
16. Second pinion
17. Satellite
18. Satellite rod
19. Camber cylinder
20. Second roll measuring rod
21. First gauge cylinder
22. Second gauge cylinder
23. Camber piston
24. First gauge piston
25. Second gauge piston
26. Upwardly extending rod
27. First suspension rod
28. Second suspension rod
29. Additional suspension arm
30. Slide
31. Roll cylinder
32. Roll piston
33. Positioning cylinder
34. Second camber cylinder
35. Positioning roll rod
36. Pivoting point

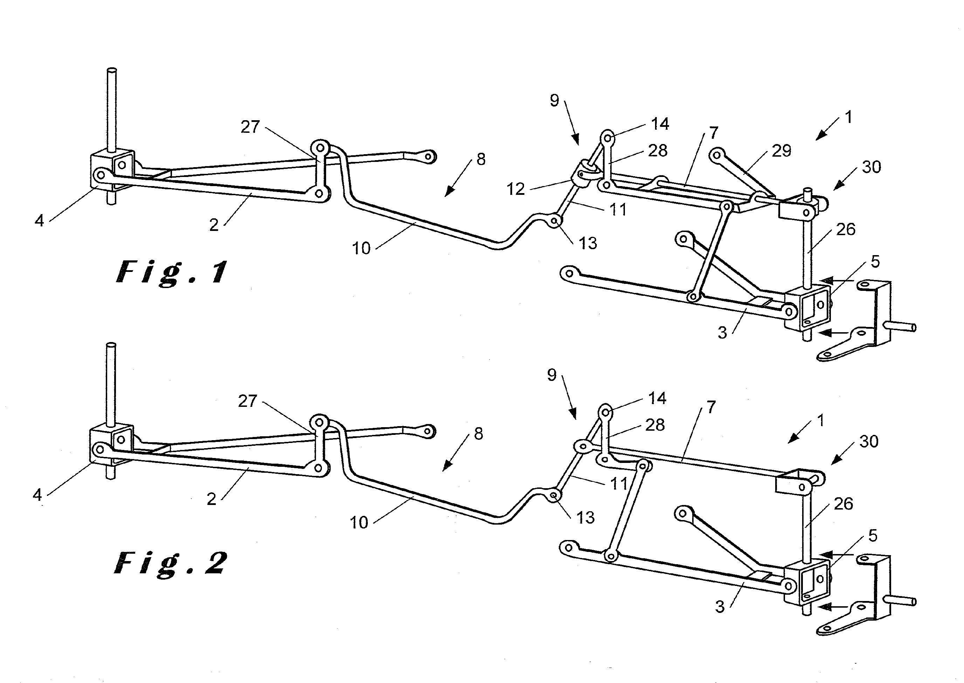

On the chassis 1 for a suspended vehicle shown in figure 1 some components of the chassis 1 have been left out for improving the clarity of the figure. For example, no suspension, such as for example coil springs which are often being used, is actually shown. Also, the frame of the chassis 1 is not shown in the figures for reasons of clarity.

The chassis 1 comprises a frame, not shown for reasons of clarity, connected to two substantial coaxial wheel knuckles 4, 5, respectively a first and a second wheel knuckle 4, 5, by two suspension arms 2, 3 on opposing sides of the frame. The knuckles 4, 5 are provided such that wheels can be mounted to them. The two suspension arms 2, 3 shown can for example be the two front or the two back suspension arms of for example a vehicle having four wheels such as for example a car. However, the two suspension arms 2, 3 can also for example be two suspension arms of a vehicle which has more than four wheels such as for example a truck, a bus, special SUV's, etc.

Although it is not clear from the figures whether the wheels to be mounted on the suspension arms 2, 3 are provided to be driven or not, this is not critical for the invention. So the suspension arms 2, 3 shown can for example be front or back suspension arms from a vehicle which can be front or back driven.

The suspension arms 2, 3 shown are of the so-called wishbone type. This is however not critical for the invention and also other types of suspension arms 2, 3 can be used in the chassis according to this invention.

Figures 1, 3 and 4 for example show that the suspension arms 2, 3 for example are part of a so-called double wishbone suspension. This is however not critical for the invention and other types can be used such as for example illustrated in figure 2 where no additional wishbone 29 is present next to the suspension arms 2, 3 shown.

The knuckles 4, 5 are linked by camber adjustment rods 6, 7, respectively a first and second camber adjustment rod 6, 7, to roll measuring means 8 for adjusting the camber angle defined by the knuckles 4, 5 in response to rolling of the suspended vehicle during turning over a roll angle measured by the roll measuring means 8.

The knuckles 4, 5 can for example be linked to the camber adjustment rods 6, 7 by an upwardly extending rod 26 as shown in the figures. The upwardly extending rod 26 can be connected to the camber adjustment rod 6, 7 using a hinge fixedly mounted to the upwardly extending rod 26, as for example shown in figure 2, or can be slideably connected to the camber adjustment rod 6, 7 using for example a slide 30 with a hinge as shown in figures 1, 3 and 4. The choice of connection for interconnecting the upward rod 26 and the camber adjustment rod 6, 7 is however not critical for the invention. Also, the upwardly extending rod 26 is not critical for the invention and any means known to the person skilled in the art suitable for interconnecting the camber adjustment rod 6, 7 to the knuckles 4, 5 can be used by the person skilled in the art.

The roll measuring means 8 are provided to measure the roll angle by comparing the angular positions of the suspension arms 2, 3 with respect to the frame.

The roll measuring means 8 preferably comprise a mechanical comparator 9 for mechanically deducing the roll angle by comparing the angular positions of the suspension arms 2, 3 with respect to the frame. In such a case preferably at least one roll measuring rod 10 is mechanically linked to a first suspension arm 2 for mechanically feeding the angular position of the first suspension arm 2 to the comparator 9 by a substantially longitudinal movement of the roll measuring rod 10. The dimensions and shape of the roll measuring rod 10 are preferably chosen such as to provide a correction of the camber, i.e. that the plane of the wheels remain in substantially the same angular position with respect to the road when stationary or while turning, for example that the plane of the wheels remain substantially perpendicular to the road even during turning of the suspended vehicle.

The first suspension arm 2 preferably is provided with a suspension rod 27, first suspension rod 27, upwardly extending from the first suspension arm 2. More preferably, the suspension rod 27 extends from where the first suspension arm 2 is connected to the frame. The suspension rod 27 preferably extends under a fixed angle, preferably substantially 90°, with the plane of the first suspension arm 2 and is for example hingedly connected to the roll measuring rod 10. By linking the roll measuring rod 10 to the comparator 9 by the suspension rod 27, the inventor has found that a change in the angular position of the first suspension arm 2 can be accurately and easily transferred to a substantially longitudinal movement of the roll measuring rod 10.

Figures 1 and 2 show roll measuring means 8 comprising in which the comparator 9 comprises a roll rod 11 which is pivottably linked to at least one of the two camber adjustment rods 6, 7, in figures 1 and 2 the second camber adjustment rod 7 of the second suspension arm 3 opposing the first suspension arm 2 with its corresponding first camber adjustment rod 6. This is however not critical for the invention and the roll rod 11 can also be connected to the first camber adjustment rod 6 of the first suspension arm 2.

The pivoting of the roll rod 11 is caused by the roll angle and adjusts the position of the second camber adjustment rod 7 such as to adjust the corresponding camber angle, preferably correct the corresponding camber angle, according to the roll angle.

The roll rod 11 preferably is linked to the roll measuring rod 10 at a first end part 13, preferably hingedly, and to the second suspension arm 3, preferably hingedly, at a second end part 14 opposing the first end part 13. In such a configuration the camber adjustment rod 7 preferably is linked to a position in between the first end part 13 and the second end part 14 and the connection between the roll rod 11 and the camber adjustment rod 7 preferably is such as to allow that the roll rod 11 pivots around the connection between the roll rod 11 and the camber adjustment rod 7.

The roll rod 11 can be linked to the second suspension arm 3 in different ways. In a first embodiment shown in figure 1, the roll rod 11 is connected to the second suspension arm 3 with a second suspension rod 28. The second suspension rod 28 preferably extends under a fixed angle, preferably substantially 90°, with the plane of the second suspension arm 2 and is for example hingeably connected to the roll rod 11. Although the second suspension rod 28 can extend directly from the second suspension arm 3, preferably additional linkage is used to interconnect the second suspension rod 28 to the second suspension arm 3 as for example shown in figures 1 and 2. Figure 1 for example shows that the additional linkage interconnecting the second suspension rod 28 to the second suspension arm 3 comprises, part of, the additional suspension arm 29 of the double wishbone suspension.

Figure 1 shows that the camber adjustment rod 6 is slideably linked to the roll rod 11 using a slide 12. Such a configuration is especially desired when using a double wishbone suspension as shown in figure 1 as in such case the camber adjustment rod 6 preferably lies in the plane of the additional suspension arm 29 of the double wishbone suspension. This is however not critical for the invention and figure 2 for example shows a configuration in which the camber adjustment rod 7 and the roll rod 11 are not slideably but instead fixedly mounted to each other.

Although figures 1 and 2 only show that the camber of a wheel connected to the first knuckle can be corrected, the invention also allows to correct the camber of a wheel connected to the second knuckle 5. For example, the roll rod 11 can also be connected to the first camber adjustment rod 6 or the measuring means 8 can comprise an additional comparator specifically for adjusting the camber of a wheel connected to the first knuckle 4, for example a second roll rod similar to the first roll rod 11. However, for reasons of clarity the means which adjust the camber of a wheel connected to the second knuckle 5 are not shown.

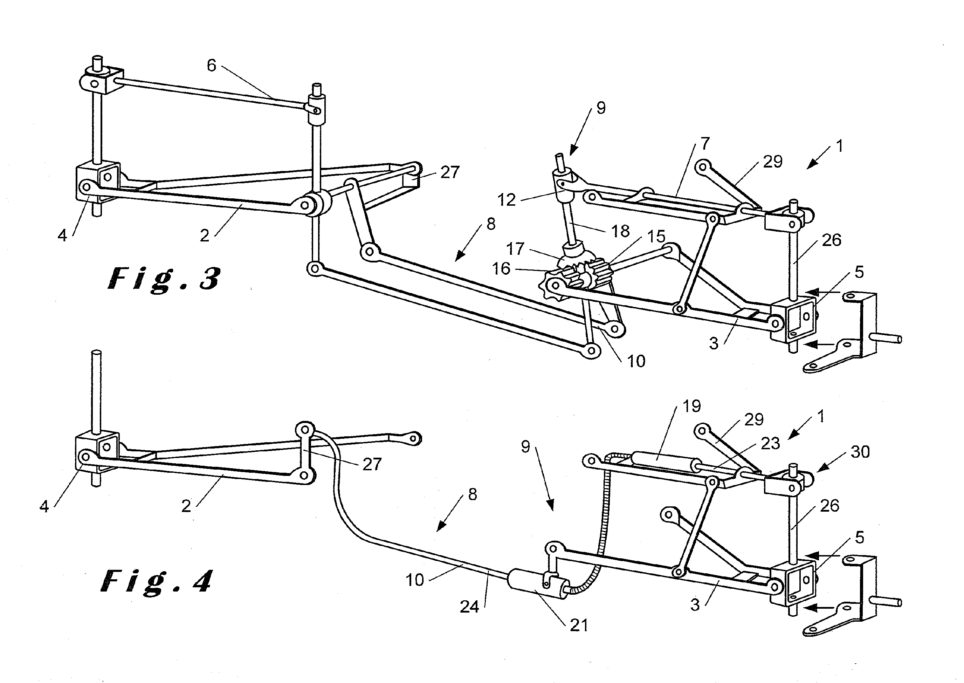

Figure 3 shows a different embodiment of the comparator 9 in which the comparator 9 comprises an assembly of a first pinion 15, a second pinion 16 and a satellite 17 engaging the first 15 and the second 16 pinion. The first pinion 15 is linked to the roll measuring rod 10 such as to rotate in accordance with the angular position of the first suspension arm 2 and the second pinion 16 rotates in accordance with the angular position of the second suspension arm 3 and thereto preferably is linked to the second suspension arm 3 accordingly. The satellite 17 engages the first and the second pinion 15, 16 such that it tilts a satellite rod 18 connected to the satellite 17 along its axis of rotation in accordance with the roll angle. The satellite rod 18 is connected to at least one of the camber adjustment rods 6, 7, in figure 3 the second camber adjustment rod 7, to adjust the position of the camber adjustment rod 6, 7 such as to adjust, preferably correct, the corresponding camber angle according to the roll angle. In such a comparator 9 the satellite rod 18 will not tilt but will rotate over the axis of rotation of the satellite 17 when the suspension arms 2, 3 both move equally in the same direction such as upward or downward, whereas when the suspension arms 2, 3 rotate unequally and/or in opposing directions the satellite rod 18 tilts in such a configuration.

Figure 3 shows that the adjustment for the second camber adjustment rod 7 is transferred to the first camber adjustment rod 6 by linking the satellite 17 and the first camber adjustment rod 6 correspondingly. However, as described above other embodiments for adjusting the camber of the wheel connected to the first knuckle 4 are possible.

Figure 4 shows yet another embodiment for the comparator 9 in which the roll measuring rod 10 is a first gauge piston 24 of a first gauge cylinder 21 of the comparator 9 which is hydraulically linked to a camber cylinder 19 of which the camber piston 23 is connected to at least one of the camber adjustment rods 6, 7, in figure 4 the second adjustment rod 7, and adjusts the position of the camber adjustment rod 7 such as to adjust, preferably correct, the corresponding camber angle according to the roll angle. In figure 4 the gauge cylinder 19 is hingedly connected to the second suspension arm 3 to allow a direction comparison of the angular positions of the first and the second suspension arm 2, 3.

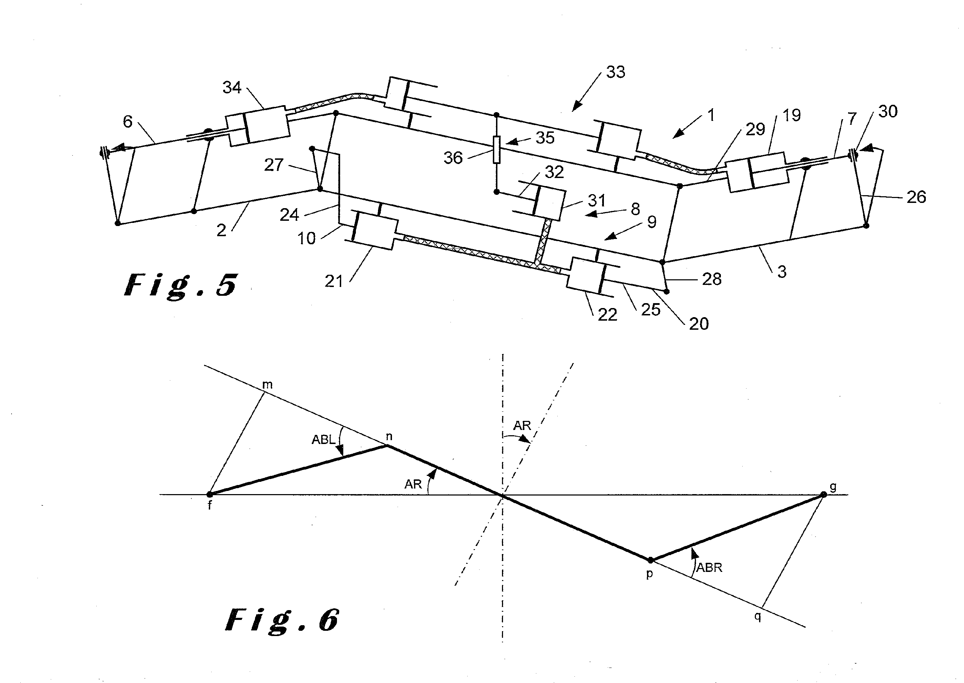

The angular positions of the first and the second suspension arms 2, 3 can also be compared by using a second roll measuring rod 20 which is mechanically linked to the second suspension arm 3 for mechanically feeding the angular position of the second suspension arm 3 to the comparator 9 by a substantially longitudinal movement of the second roll measuring rod 20. This is for example illustrated in figure 5 for an embodiment of the comparator 9 comprising gauge cylinders for comparing the angular positions of the first and the second suspension arms 2, 3. In figure 5 the second roll measuring rod 20 is a second gauge piston 25 of a second gauge cylinder 22 of the comparator 9. The second gauge cylinder 22 is hydraulically linked to the first gauge cylinder 21 and both of the first and the second gauge cylinder 21, 22 are hydraulically linked to the camber cylinder 19. In such an embodiment the first and the second gauge cylinders 21, 22 can be mounted fixedly to the frame as the comparison of the angular positions of the first and the second suspension arm 1, 2 is done hydraulically.

Figure 5 particularly shows that the first and the second gauge cylinders 21, 22 are hydraulically linked to a roll cylinder 31 of which the roll piston 32 is linked to a positioning cylinder 33 which in its turn is preferably hydraulically connected to both of the camber cylinders 19, 34 of the first and the second suspension arm 2, 3. The roll piston 32 is preferably linked to the pistons of the position cylinder 33 with a positioning roll rod 35 which is mounted pivotably over a pivoting point 36.

Hereunder is illustrated how the roll angle can be deduced from a comparison from the angular position, preferably the angles, of the suspension arm 2, 3 with respect to the frame.

Figure 6 illustrates how the angular positions of the suspension arms 2, 3 is related to the roll angle. In this figure and in the following calculations T represents the sum of the width of the frame and the length of the two suspension arms, more in particular fn + np + pg, B represents the length of the suspension arms, i.e. fn and pg which are assumed to be substantially equal, ABL represents the angle between the first suspension arm 2 and the frame and ABR represents the angle between the second suspension arm 3 and the frame.
Therefore:

$$\tan AR = \frac{fm + gq}{mq}$$

and

fm = B * sin ABL and gq = B * sin ABR
mq = mn + np + pq
mn = B * cos ABL
np = T-2B
pq = B*cosABR
mq = T-2B + B * (cos ABL + cos ABR)

Therefore:

6

$$\tan AR = \frac{B * (\sin ABL + \sin ABR)}{T - B * (2 - \cos ABL - \cos ABR)}$$

$$\tan AR = \frac{\sin ABL + \sin ABR}{T/B - (2 - \cos ABL - \cos ABR)}$$

Therefore: tan AR = (sin ABL + sin ABR) / (T/B - z)
with z = 0 ... 0.07 for ABL & ABR up to +/- 15°

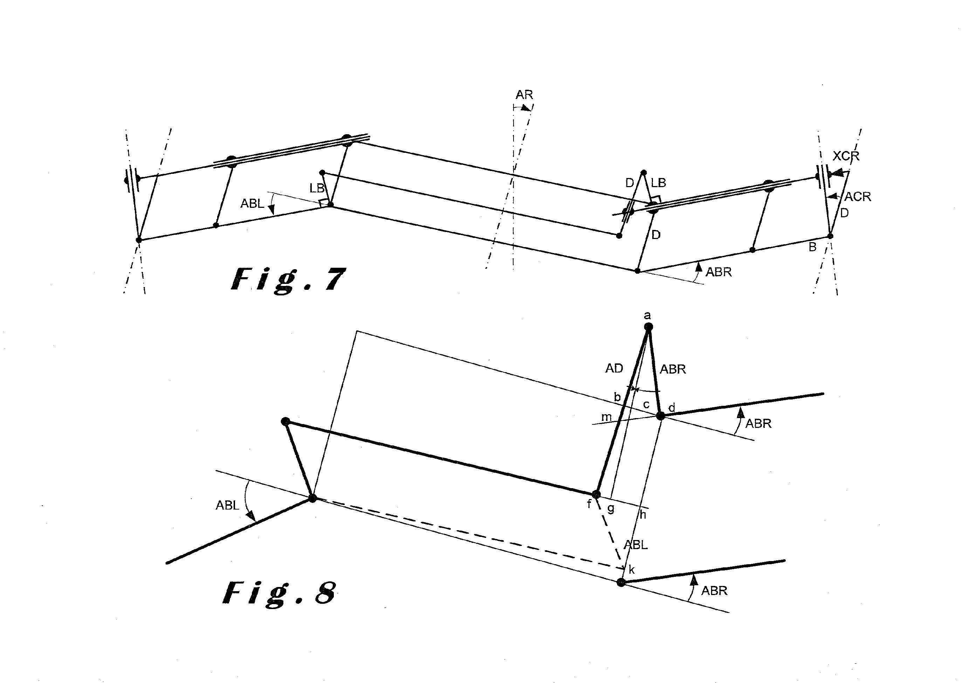

Figure 7, and more schematically figure 8, shows a cross-section of figure 1 although the same calculations hold for a situation as depicted in figure 2. D refers to the vertical distance between the mounting points of the two suspension arms 3, 29 of a double wishbone suspension, LB to the length of the second suspension rod 28 which equals half of D, XCR refers to the distance between the roll rod and the suspension rod along the longitudinal direction of the suspension arm and therefore equals md indicated in figure 8 and ACR refers to correction angle of the wheel connected to the second knuckle. In such a situation:

| fg/af = fg/2LB = sin AD | fh/fk = fh/LB = sin ABL | cd/ad = sin ABR |
|---|---|---|
| fg=2*LB*sinAD | fh=LB*sinABL | cd = gh = LB * sin ABR |
| | fg=fh-gh | |

Therefore:

2*LB*sinAD=LB*sinABL-LB*sinABR
Such that: sin AD = ½ * (sin ABL - sin ABR)

XCR = md = ad * tan(ABR + AD) = LB * tan(ABR + AD)
tan ACR = XTR / D = LB/D * tan(ABR + AD) = ½ * tan(ABR + AD)

Since for small angles x: tan(x) ~ sin(x) - x
AD ~ ½ *(ABL — ABR) and ACR ~ % * (ABR + And) ~ ¼ * (ABL + ABR)
and since tan AR = (sin ABL + sin ABR) / (T/B - z) with z = 0...0.07
AR - (ABL + ABR) / (T/B - z)

Neutral Camber is achieved if ACR = AR i.e. if ¼* (ABL + ABR) = (ABL + ABR) /
(T/B-z) thus if T/B - z = 4 or if B - T/4.

The inventor has indeed found that in such a situation as shown in figures 7 and 8, i.e. equal suspension length of the suspension arms 2, 3, the length of the second suspension rod 28 equalling half of the vertical distance D, the length of the roll rod 11 equaling the vertical distance D and the suspension rods 27, 28 each being mounted substantially perpendicular on the plane of the respective suspension arm 2, respectively 3, when B = T/4 neutral camber, i.e. the wheels remain in substantially the same angular position with respect to the road as while driving on a straight road as well as during turning, can be obtained within 0.05° accuracy for roll angles up to +/- 5°.

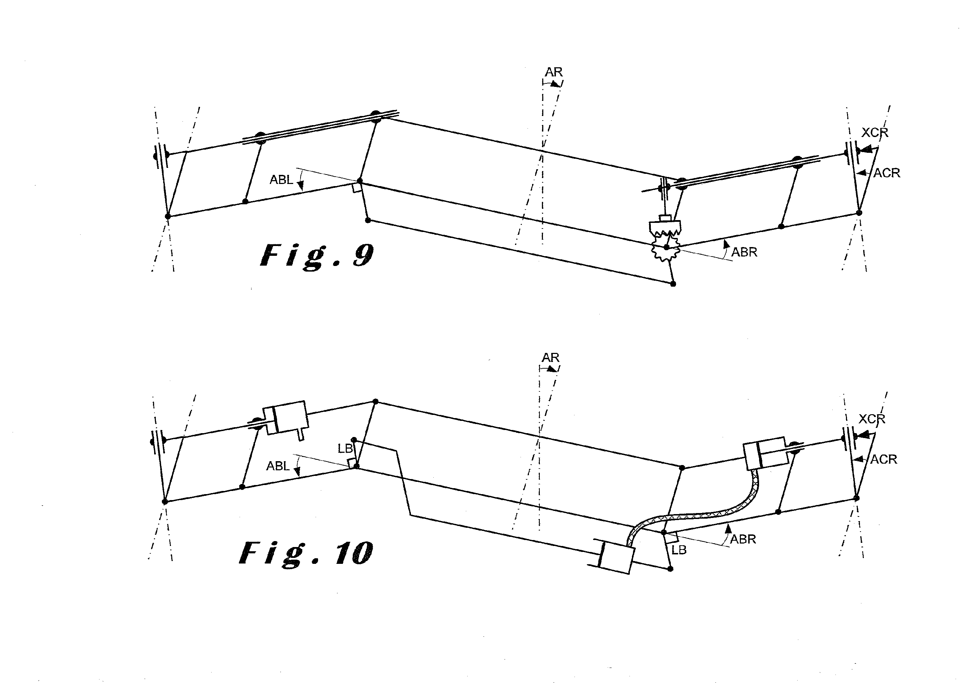

Figure 9 shows a cross-section of figure 3 in which TW refers to the number of teeth of the first and the second pinion 15, 16, TS refers to the number of teeth of the satellite 17 and AS to the angle between the satellite rod 18 and a direction perpendicular to the road.

In such a situation: AS = ½* (ABL + ABR) * TW / TS and ACR = AS = ½ * (ABL + ABR) * TW / TS therefore tan ACR = tan(½ * (ABL + ABR) * TW / TS) and since tan AR = (sin ABL + sin ABR) / (T/B - z) with z = 0...0.07, neutral camber is achieved if ACR = AR and hence if tan(½ * (ABL + ABR) * TW / TS) = (sin ABL + sin ABR) / (T/B - z). Hence ½ * (ABL + ABR) * TW / TS - (ABL + ABR) / (T/B - z) and thus TW / TS - 2 / (T/B - z) and TS / TW - T / 2B. The inventor has found that when TS/TW = T/2B neutral camber can be achieved within .05° accuracy for roll angles up to +/- 5°.

Figure 10 shows a cross section of figure 4. SG refers to the area of a section of the gauge cylinder, VGR refers to the volume change of the gauge cylinder, XPR refers to the stroke of the gauge piston, XGR refers to the stroke of the gauge cylinder, SC refers to the area of the section of the camber cylinder, VCR to the volume change of the camber cylinder, XCR now also equals the stroke of the camber adjustment rod. In such a situation: XPR = LB * sin ABL and XGR = LB * sin ABR and therefore VGR = (XPR + XGR) * SG = SG * LB * (sin ABL + sin ABR). Also VCR = VGR = SG * LB * (sin ABL + sin ABR) and therefore XCR = VCR / SC = LB * SG/SC * (sin ABL + sin ABR). Since tan ACR = XCR / D = LB/D * SG/SC * (sin ABL + sin ABR) and since tan AR = (sin ABL + sin ABR) / (T/B - z) with z = 0...0.07 neutral camber can be achieved if ACR = AR and therefore if LB/D * SG/SC = 1 / (T/B -z) or LB - D * SC/SG / (T/B - 0.04)

The inventor has found that when LB = D * SC/SG / (T/B - 0.04) neutral camber is achieved within .05° accuracy for roll angles up to +/- 5°.

Figure 5 shows a more elaborate example in which hydraulics are being used to adjust the camber to obtain neutral camber. In figure 5, XGL and XGR represent respectively the stroke of the first and the second gauge piston, SR represents the area of the section of the roll cylinder, VR the volume change of the roll cylinder, XR the stroke of the roll piston, LR the lever of the roll piston, LP the lever of the positioning piston, SP the area of the section of the positioning cylinder, VP the area of the volume change of the positioning cylinder, XPR the stroke of the positioning piston driving the second camber cylinder, SC the area of the section of the camber cylinder and VC the volume change of the camber cylinder. In such a situation XGL = LB * sin ABL and XGR = LB * sin ABR such that VD = ( XGL + XGR) * SG = LB * (sin ABL + sin ABR) * SG. Also XR = VR / SR, XP = XR * LP/LR and VP = XP * SP = VC. Since camber the stroke of the camber piston substantially equals the stroke of the camber adjustment rod XTR = VC / SC = LB * (sin ABL + sin ABR) * SG/SR * SP/SC * LP/LR. Since tan ACR = XCR / D = LB/D * (sin ABL + sin ABR) * SG/SR * SP/SC * LP/LR and tan AR = (sin ABL + sin ABR) / (T/B - z) with z = 0...0.07 neutral camber is achieved if LB/D * (sin ABL + sin ABR) * SG/SR * SP/SC * LP/LR = (sin ABL + sin ABR) / (T/B - z) and thus if LP/LD - D/LB * SR/SG * SC/SP / (T/B - 0.04).

The inventor has found that neutral camber is achieved in such a case within .05° accuracy for roll angles up to +/- 5°. Moreover by changing LP/LR by moving the pivot point 36 along the roll rod 35 enables camber management, even while driving such that camber can be adapted during driving depending on the desired camber depending on for example wheather conditions, road conditions, speed of the vehicle, etc. It is for example to overcorrect or undercorrect the camber of the wheels to obtain wheels which therefore have, under certain conditions depending on the comparison of the angular positions of the suspension arms 2, 3, a so-called negative or even positive camber.

## Claims

1. Chassis (1) for a suspended vehicle comprising a frame connected to coaxial wheel knuckles (4, 5) by two suspension arms (2, 3) on opposing sides of the frame, the knuckles (4, 5) being linked by camber adjustment rods (6, 7) to roll measuring means (8) for adjusting the camber angle defined by the knuckles (4, 5) in response to rolling of the suspended vehicle during turning over a roll angle measured by the roll measuring means (8), **characterised in that** the roll measuring means (8) are provided to measure the roll angle by comparing the angular positions of the suspension arms (2, 3) with respect to the frame.

2. Chassis (1) for a suspended vehicle as claimed in claim 1, **characterised in that** the roll measuring means (8) comprise a mechanical comparator (9) for mechanically deducing the roll angle by comparing the angular positions of the suspension arms (2, 3) with respect to the frame and at least one roll measuring rod (10) mechanically linked to a first suspension arm (2) for mechanically feeding the angular position of the first suspension arm (2) to the comparator (9) by a substantially longitudinal movement of the roll measuring rod (10).

3. Chassis (1) for a suspended vehicle as claimed in claim 2, **characterised in that** the comparator (9) comprises a roll rod (11) pivotably linked to at least one of the two camber adjustment rods (6, 7) wherein the pivoting of the roll rod (11) is caused by the roll angle and adjusts the position of the camber adjustment rod (6, 7) such as to adjust the corresponding camber angle according to the roll angle.

4. Chassis (1) for a suspended vehicle as claimed in claim 3, **characterised in that** the camber adjustment rod (6, 7) is slideably linked to the roll rod (11).

5. Chassis (1) for a suspended vehicle as claimed in claim 3 or 4, **characterised in that** the roll rod (11) is linked to the roll measuring rod (10) at a first end part (13) and to the second suspension arm (3) at a second end part (14) opposing the first end part (13).

6. Chassis (1) for a suspended vehicle as claimed in claim 2, **characterised in that** the comparator (9) comprises an assembly of a first pinion (15), a second pinion (16) and a satellite (17) engaging the first (15) and the second (16) pinion, the first pinion (15) linked to the roll measuring rod (10) such as to rotate in accordance with the angular position of the first suspension arm (2) and the second pinion (16) rotating in accordance with the angular position of the second suspension arm (3), the satellite (17) engaging the first and the second pinion (15, 16) such that it tilts a satellite rod (18) connected to the satellite (17) along its axis of rotation in accordance with the roll angle, the satellite rod (18) being connected to at least one of the camber adjustment rods (6, 7) to adjust the position of the camber adjustment rod (6, 7) such as to adjust the corresponding camber angle according to the roll angle.

7. Chassis (1) for a suspended vehicle as claimed in claim 2, **characterised in that** the roll measuring rod (10) is a first gauge piston (24) of a first gauge cylinder (21) of the comparator (9) which is hydraulically linked to a camber cylinder (19) of which the camber piston (23) is connected to at least one of the camber adjustment rods (6, 7) and adjusts the position of the camber adjustment rod (6, 7) such as to adjust the corresponding camber angle according to the roll angle.

8. Chassis (1) for a suspended vehicle as claimed in any one of the preceding claims 2 - 7, **characterised in that** a second roll measuring rod (20) is mechanically linked to the second suspension arm (3) for mechanically feeding the angular position of the second suspension arm (3) to the comparator (9) by a substantially longitudinal movement of the second roll measuring rod (20).

9. Chassis (1) for a suspended vehicle as claimed in claim 7 in combination with claim 8, **characterised in that** the second roll measuring rod (20) is a second gauge piston (25) of a second gauge cylinder (22) of the comparator (9) and **in that** the second gauge cylinder (22) is hydraulically linked to the first gauge cylinder (21) and **in that** the first and the second gauge cylinder (21, 22) are hydraulically linked to the camber cylinder (19).

10. Suspended vehicle comprising a chassis (1) according to any one of claims 1 - 9.

11. Suspended vehicle according to claim 10, **characterised in that** the vehicle is four-wheeled.

12. Suspended vehicle according to claim 10 or 11, **characterised in that** the suspended vehicle is a car.

13. Method for correcting the camber of a suspended vehicle in response to rolling of the suspended vehicle during turning over a roll angle AR, the vehicle having two suspension arms (2, 3) on opposing sides of a frame of the suspended vehicle, wherein the roll angle AR is calculated by comparing the angles ABL and ABR between the suspension arms and the frame and using the length of the suspension arms (2, 3) B and the sum T of the length of the suspension arms B with the width of the frame.

14. Method according to claim 13, **characterised in that** the formula

$$\tan AR = \frac{\sin ABL + \sin ABR}{T/B - (2 - \cos ABL - \cos ABR)}$$

is used to calculate the roll angle.

15. Method according to claim 13 or 14, **characterised in that** the formula $\tan AR = (\sin ABL + \sin ABR) / (T/B - z)$ with $z = 0 \dots 0.07$ for ABL & ABR up to +/- 15°.

Fig.1

Fig.2

**Fig.3**

**Fig.4**

EP 2 332 754 A1

**Fig.5**

**Fig.6**

Fig. 7

Fig. 8

*Fig. 9*

*Fig. 10*

Europäisches
Patentamt

European
Patent Office

Office européen
des brevets

# EUROPEAN SEARCH REPORT

Application Number

EP 09 17 7458

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 898 571 A1 (RENAULT SAS [FR]) 21 September 2007 (2007-09-21) | 1-3,5,8, 10-12 | INV. B60G3/26 B60G21/05 B60G21/073 B62D17/00 |
| Y | * page 3, line 14 - page 7, line 8; figures 1,2,8,9 * | 7,9 | |
| X | DE 28 55 105 A1 (SCHWARZ WALDEMAR) 10 July 1980 (1980-07-10) | 1,10-12 | |
| Y | * page 6, paragraph 2 - paragraph 3; figures 6,7 * | 7,9 | |
| X | US 6 267 387 B1 (WEISS WOLFGANG [DE]) 31 July 2001 (2001-07-31) * column 3, line 24 - column 6, line 29; figures 1,2,5-7,9,10 * | 1,2,7-12 | |
| X | US 5 324 056 A (ORTON KEVIN R [US]) 28 June 1994 (1994-06-28) * column 1, line 31 - column 4, line 58; figures 1-5 * | 1-3,8, 10-12 | |
| X | CH 537 818 A (JEANDUPEUX PIERRE ANTOINE [CH]) 15 June 1973 (1973-06-15) * the whole document * | 1-3,8, 10-12 | TECHNICAL FIELDS SEARCHED (IPC) B60G B62D |
| X | FR 2 451 281 A1 (JOYE JOYE [FR]) 10 October 1980 (1980-10-10) * page 1, line 28 - page 7, line 34; figure 10 * | 1-3,8, 10-12 | |
| X | US 2003/205880 A1 (WALKER PETER JOHN [GB]) 6 November 2003 (2003-11-06) | 1,10-12 | |
| A | * paragraph [0013] - paragraph [0032]; figures 1-4 * | 2,3,7-9 | |
| X | EP 1 510 373 A1 (FORD GLOBAL TECH LLC [US]) 2 March 2005 (2005-03-02) | 1,10-12 | |
| A | * paragraph [0016] - paragraph [0031]; figures 1-4 * | 2,3,5,8 | |

-/--

~~The present search report has been drawn up for all claims~~

| Place of search | Date of completion of the search | Examiner |
|---|---|---|
| Munich | 17 June 2010 | Roberts, Davide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 474 967 A1 (ZAMPINI HECTOR [AR]) 7 August 1981 (1981-08-07) | 1,10-12 | |
| A | * the whole document * | 2 | |
| | ----- | | |
| A | US 5 498 019 A (ADATO HENRI [US]) 12 March 1996 (1996-03-12) * the whole document * | 1,4 | |
| | ----- | | |
| A,D | US 2002/070509 A1 (SEUNG-HOON WOO (KR)) 13 June 2002 (2002-06-13) * the whole document * | 1,2,6, 10-12 | |
| | ----- | | |

TECHNICAL FIELDS
SEARCHED      (IPC)

~~The present search report has been drawn up for all claims~~

| Place of search | Date of completion of the search | Examiner |
|---|---|---|
| Munich | 17 June 2010 | Roberts, Davide |

EPO FORM 1503 03.82 (P04C01)

Europäisches
Patentamt

European
Patent Office

Office européen
des brevets

**Application Number**

EP 09 17 7458

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-12

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION
SHEET B**

The Search Division considers that the present European patent application does not comply with the
requirements of unity of invention and relates to several inventions or groups of inventions, namely:

    1. claims: 1-12

        A chassis for a suspended vehicle (and a suspended vehicle
        including such a chassis) comprising a frame connected to
        coaxial wheel knuckles  by two suspension arms on opposing
        sides of the frame, the knuckles  being linked by camber
        adjustment rods to roll measuring means  for adjusting the
        camber angle defined by the knuckles  in response to rolling
        of the suspended vehicle during turning over a roll angle
        measured by  comparing the angular positions of the
        suspension arms with respect to the frame, the roll
        measuring means comprises a mechanical / fluid comparator
        for mechanically / fluidly deducing the roll angle by
        comparing the angular positions of the suspension arms with
        respect to the frame and at least one roll measuring rod
        mechanically linked to a first suspension arm for
        mechanically feeding the angular position of the first
        suspension arm  to the comparator by a substantially
        longitudinal movement of the roll measuring rod.
                            ---

    2. claims: 13-15

        A method for correcting the camber of a suspended vehicle in
        response to rolling of the suspended vehicle during turning
        over a roll angle AR, the vehicle having two suspension arms
        on opposing sides of a frame of the suspended vehicle,
        wherein the roll angle AR is calculated by comparing the
        angles ABL and ABR between the suspension arms and the frame
        and using the length of the suspension arms  B and the sum T
        of the length of the suspension arms B with the width of the
        frame.
                            ---

**ANNEX TO THE EUROPEAN SEARCH REPORT
ON EUROPEAN PATENT APPLICATION NO.**

EP 09 17 7458

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2010

| Patent document cited in search report | | Publication date | Patent family member(s) | | Publication date |
|---|---|---|---|---|---|
| FR 2898571 | A1 | 21-09-2007 | NONE | | |
| DE 2855105 | A1 | 10-07-1980 | NONE | | |
| US 6267387 | B1 | 31-07-2001 | DE 19637159 A1 | | 19-03-1998 |
| | | | WO 9810949 A2 | | 19-03-1998 |
| | | | EP 0925199 A2 | | 30-06-1999 |
| | | | JP 2001502984 T | | 06-03-2001 |
| US 5324056 | A | 28-06-1994 | WO 9505948 A1 | | 02-03-1995 |
| CH 537818 | A | 15-06-1973 | NONE | | |
| FR 2451281 | A1 | 10-10-1980 | NONE | | |
| US 2003205880 | A1 | 06-11-2003 | NONE | | |
| EP 1510373 | A1 | 02-03-2005 | NONE | | |
| FR 2474967 | A1 | 07-08-1981 | AR 218812 A1 | | 30-06-1980 |
| US 5498019 | A | 12-03-1996 | DE 69515970 D1 | | 04-05-2000 |
| | | | DE 69515970 T2 | | 14-12-2000 |
| | | | EP 0716942 A1 | | 19-06-1996 |
| US 2002070509 | A1 | 13-06-2002 | JP 3543223 B2 | | 14-07-2004 |
| | | | JP 2002225525 A | | 14-08-2002 |
| | | | KR 20020044929 A | | 19-06-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020070509 A1